# EUROPÄISCHE PATENTSCHRIFT

(11) **EP 1 501 179 B1**
(45) Veröffentlichungstag und Bekanntmachung des Hinweises auf die Patenterteilung: **17.09.2008**
(21) Anmeldenummer: 04010468.9
(22) Anmeldetag: 15.07.2003
(51) Int. Cl.: H02M 3/338

(54) **Freischwingender Sperrwandler mit Strom- und Spannungsbegrenzung**
Freely oscillating flyback converter with current and voltage limitation
Convertisseur à découpage auto-oscillant à limitation de courant et de tension

(43) Veröffentlichungstag der Anmeldung: 26.01.2005
(62) Teilanmeldung aus: 03016065.9
(73) Patentinhaber: Friwo Mobile Power GmbH, 48346 Ostbevern (DE)
(72) Erfinder: Schröder genannt Berghegger, Ralf, 49219 Glandorf (DE)
(74) Vertreter: Grünecker, Kinkeldey, Stockmair & Schwanhäusser Anwaltssozietät

(56) Entgegenhaltungen:
- EP-A- 0 852 424
- GB-A- 2 379 036
- US-A- 4 630 186
- US-A- 5 168 435
- US-A- 5 867 373
- US-A1- 2002 057 081
- US-A1- 2002 186 572

## Beschreibung

Die vorliegende Erfindung bezieht sich auf ein Schaltnetzteil, insbesondere auf ein Schaltnetzteil mit einer Primärseite und einer Sekundärseite, das einen Transformator mit einer primärseitigen Wicklung, einer sekundärseitigen Wicklung und mindestens einer Hilfswicklung aufweist. Die primärseitige Wicklung und die Hilfswicklung sind mit der Primärseite verbunden und die sekundärseitige Wicklung ist mit der Sekundärseite verbunden. Das Schaltnetzteil weist einen primärseitigen Schalter, der mit der primärseitigen Wicklung verbunden ist, um einen Stromfluss durch die primärseitige Wicklung zu unterbrechen, eine freischwingende Schaltung zum Erzeugen von Schaltpulsen, die den primärseitigen Schalter ansteuern, und eine Schaltung zum Erzeugen einer Bildspannung zwischen den Anschlüssen der Hilfswicklung, um eine Bildspannung zu erzeugen, die auf der Primärseite eine zu regelnde Spannung auf der Sekundärseite abbildet, auf.

Schaltnetzteile werden in zahlreichen elektronischen Geräten verwendet, um aus einer Netzspannung die zum Versorgen der elektronischen Bauteile notwendigen Niedervoltgleichspannung zu erzeugen. Dabei haben sich Schaltnetzteile gegenüber konventionellen Netzteilen mit Netztransformatoren in vielen Anwendungsfällen durchgesetzt, da sie ab einer gewissen Leistungsklasse einen besseren Wirkungsgrad aufweisen und insbesondere einen geringeren Platzbedarf haben.

Letzteres ist insbesondere darauf zurückzuführen, dass statt der Netzspannung eine hochfrequente Wechselspannung transformiert wird, die anstelle der üblichen Netzfrequenz von 50 Hz oder 60 Hz beispielsweise im Bereich von 20 kHz bis 200 kHz liegen kann. Da die erforderlichen Windungszahlen des Transformators umgekehrt proportional zur Frequenz sinken, lassen sich dadurch die Kupferverluste stark reduzieren und der eigentliche Transformator wird wesentlich kleiner.

Um den Wirkungsgrad weiter zu optimieren, sind insbesondere primär getaktete Schaltnetzteile bekannt, bei denen die auf Primärseite des Hochfrequenztransformators durch den Schalter, beispielsweise einen bipolaren Transistor, erzeugte Frequenz in Abhängigkeit von der auf der Sekundärseite des Netzteils anliegenden Last geregelt wird, um die übertragene Leistung zu regeln. Die zu einer solchen Regelung erforderliche Rückkopplung wird beispielsweise dadurch realisiert, dass eine an einer Hilfswicklung abgegriffene Spannung als Regelgröße verwendet wird. Ein entsprechendes Verfahren zur Regelung des Ausgangsstroms und/oder der Ausgangsspannung ist in der EP 1 146 630 A2 beschrieben und beinhaltet, dass mit jedem Puls die gleiche Energie in den Transformator geladen wird. Allerdings hat die in diesem Dokument gezeigte Schaltungsanordnung den Nachteil, vergleichsweise aufwendig aufgebaut zu sein, da als Ansteuerschaltung eine relativ komplexe integrierte Schaltung eingesetzt wird.

Die preisgünstigste Art, ein Schaltnetzteil mit galvanischer Trennung zwischen Primär- und Sekundärteil aufzubauen, ist ein freischwingender Sperrwandler. Diese Netzteilart hat jedoch grundsätzlich den Nachteil, dass bei geringer Last die Schaltfrequenz deutlich ansteigt. Dies hat zur Folge, dass die Verlustleistung im Leerlauf und bei geringer Belastung groß ist.

Eine indirekte Messung der Ausgangsspannung durch eine Messung der Spannung an einer primären Hilfswicklung oder der primären Hauptwicklung ist bei diesem Netzteiltyp erschwert. Durch die induzierte Spannung der Streuinduktivität entsteht nämlich eine kurzzeitige Spannungsüberhöhung, die man bei großer Pulsbreite auf einfache Weise herausfiltern kann, so dass es möglich ist, die Sekundärspannung relativ genau zu bestimmen. Bei geringer Last sinkt die Pulsbreite jedoch soweit ab, dass es kaum noch möglich ist, die induzierte Spannung der Streuinduktivität herauszufiltern. Somit kann die Ausgangsspannung bei geringer Last nur noch sehr ungenau bestimmt werden. Ein Beispiel für eine derartige einfache diskrete Schaltungstechnik ist der britischen Offenlegungsschrift GB 02379036 zu entnehmen. Bei dieser Schaltung wird, um den Nachteilen einer unbefriedigenden Regelgenauigkeit zu begegnen, die Verwendung eines Optokopplers vorgeschlagen. Ein derartiger Optokoppler jedoch erhöht wiederum die Komplexität und die Kosten des gesamten Schaltnetzteils.

Die US 2002/186572 A1 zeigt ein Schaltnetzteil mit einer Steuerschaltung, die zwischen einer Rückkopplungswicklung und einem primärseitigen Schalter angeordnet ist. Die Steuerschaltung vermindert die Einschaltzeit des primärseitigen Schalters bei abnehmender Last und sorgt dafür, dass bei geringer Last die Ausschaltzeit zunimmt. Somit wird die Ausgangsspannung in Übereinstimmung mit einem Rückkopplungssignal konstant gehalten.

Aus der GB 2 379 036 A ist ein Schaltnetzteil mit einer Hilfswicklung und einer freischwingenden Schaltung bekannt, welche die Schaltpulse basierend auf dem Wert der Bildspannung erzeugt, um die Höhe der Ausgangsspannung zu begrenzen. Weiterhin ist ein zusätzliches Rückkopplungssignal in Abhängigkeit von dem Ausgangsstrom und der Ausgangsspannung vorgesehen, das über einen Optokoppler auf die Primärseite zurückgekoppelt wird.

Die US 4,630,186 offenbart ein Schaltnetzteil, das den Strom durch die primärseitige Wicklung entsprechend einem wiederholten Schalten eines Bipolartransistors schaltet, und das einen Kondensator, der von einer Hilfswicklung gespeist wird, für eine umgekehrte Vorspannung des Basisemitterpfads des Bipolartransistors verwendet. Die in einer ersten Hilfswicklung induzierte Spannung wird an die Basis des Bipolartransistors angelegt, um die Basisspannung anzuheben und dadurch den Bipolartransistor schnell anzuschalten. Eine zweite Hilfswicklung dient einer Überlastsicherung und stabilisiert die Ausgangsspannung dadurch, dass im Fall eines zunehmenden Stromflusses durch die zweite Hilfswindung die Spannung an dem Kondensator erhöht wird und dadurch letztendlich die Energie, die in der primärseitigen Wicklung bereitgestellt wird, zunimmt, um die Ausgangsspannung anzuheben.

Eine weiteres Schaltnetzteil ist aus der US 5,867,373 bekannt, bei der ein Schalttransistor eine an einer Primärwicklung des Transformators anliegende Spannung periodisch durchschaltet. Das Schaltnetzteil weiterhin ein Basisstromnetzwerk und eine Schaltstufe zum Betreiben des Schalttransistors, und eine Regelstufe zum Stabilisieren der Sekundärspannung, wobei der Schalttransistor während des Betriebs eine Einschaltphase, eine Sperrphase und eine Oszillationsphase aufweist. Beim Einschalten wird der Schalttransistor über einen hochohmigen Widerstand, eine primärseitige Wicklung und einen Kondensator stufenweise durchgeschaltet. Anschießend schwingt das Schaltnetzteil selbstständig über die primärseitige Wicklung und gesteuert durch die Regelstufe. Durch ein passives Netzwerk parallel zur Regelstufe wird der Schalttransistor definiert im Minimum der ersten Oszillation der Kollektorspannung durchgeschaltet. Die Einschaltverluste sollen dadurch reduziert werden. Für einen Standby-Betrieb ist das Schaltnetzteil mit einem zusätzlichen Netzwerk versehen, das den Schalttransistor für eine definierte Zeit durchsteuert.

Die US 5,168,435 bezieht sich auf einen Spannungswandler mit einem Transformator, einem Schalttransistor, einem Widerstand, einem Steuerungstransistor und einer Steuerungsschaltung. Der Transformator hat eine primärseitige Wicklung, eine sekundärseitige Wicklung und eine primärseitige Hilfswicklung und der Schalttransistor ist in Serie zu der primärseitigen Wicklung geschaltet. Der Widerstand liegt zwischen dem Schalttransistor und einem Anschluss der Eingangsspannungsquelle und der Steuerungstransistor ist mit seiner Basis mit einem Knotenpunkt zwischen dem Widerstand und dem Schalttransistor verbunden und mit seinem Kollektor mit der Steuerelektrode des Schalttransistors verbunden. Die Steuerschaltung steuert den Steuertransistor basierend auf der Bildspannung, die aus der Hilfswicklung gewonnen wird. Ein Optokoppler kann vorgesehen sein, um eine sekundärseitige Ausgangsspannung auf die Primärseite zurückzukoppeln.

Die US 2002/057081 A1 offenbart ein Verfahren und eine Schaltung zum Detektieren eines Betriebszustands mit schwacher Last. Dabei wird eine zusätzliche Wicklung vorgesehen, um zu bestimmen, ob das Schaltnetzteil unter Schwachlast arbeitet und gegebenenfalls einen Leistungssparschaltkreis zu aktivieren.

Die EP 0 852 424 A2 offenbart ganz allgemein ein Schaltnetzteil, das eine primärseitige Hilfswicklung zum Einstellen einer Bildspannung aufweist.

Daher besteht die Aufgabe, die der vorliegenden Erfindung zugrunde liegt, darin, ein gattungsgemäßes Schaltnetzteil anzugeben, das bei reduzierter Komplexität eine verbesserte Regelungscharakteristik sowie eine erhöhte Flexibilität bezüglich der Betriebsparameter ermöglicht.

Diese Aufgabe wird durch ein Schaltnetzteil mit den Merkmalen des Patentanspruchs 1 gelöst. Vorteilhafte Weiterbildungen des erfindungsgemäßen Schaltnetzteils sind Gegenstand mehrerer Unteransprüche.

Die vorliegende Erfindung basiert auf der Erkenntnis, dass mit Hilfe einer Zeitsteuerungseinheit, die so mit dem primärseitigen Schalter gekoppelt ist, dass die Dauer einer Ausschaltzeit des primärseitigen Schalters innerhalb eines Schaltzyklus einstellbar, insbesondere verlängerbar ist, bei einer geringen Last eine geringe Schaltfrequenz beibehalten werden kann und dadurch eine genaue Spannungsregelung sowie das Einstellen verschiedener Ausgangsstromkennlinien möglich ist. Darüber hinaus ist das erfindungsgemäße Schaltnetzteil aus wenigen preiswerten Bauteilen aufgebaut. Das erfindungsgemäße Schaltnetzteil bietet also den Vorteil geringer Kosten bei gleichzeitig genauer Ausgangsspannungsregelung, geringer Leerlaufeingangsleistung, sowie einer äußerst variablen Einsetzbarkeit. Schließlich besitzt das erfindungsgemäße Schaltnetzteil auch den Vorteil eines Kurzschlussschutzes.

Gemäß einer vorteilhaften Ausführungsform weist die Zeitsteuerungseinheit einen Ansteuerkondensator auf, über dessen Ladestrom die Ausschaltzeit des primärseitigen Schalters einstellbar ist. Auf diese Weise kann sowohl eine Beschleunigung des Einschaltvorganges wie auch eine Beschleunigung des Abschaltvorganges erreicht werden. Die Abschaltdauer des primärseitigen Schalters kann über den Ansteuerkondensator auf besonders einfache Weise verlängert werden. Somit wird die übertragene Leistung so eingestellt, dass sich eine nahezu lastunabhängige Ausgangsspannung ergibt. Die Erfassung der Ausgangsspannung auf der Primärseite wird dabei dadurch erleichtert, dass die übertragene Energie mit jedem Puls gleich ist, so dass sich immer eine relativ lange Zeit ergibt, während der in der Sekundärwicklung Strom fließt. Kurze Spannungsspitzen, die durch Streuinduktivität entstehen, können bei dem erfindungsgemäßen Schaltnetzteil mit Hilfe von RC-Gliedern herausgefiltert werden.

Sieht man in der Zeitsteuerungseinheit eine Diode vor, die den Ladestrom des Ansteuerkondensators während der Ausschaltzeit des primärseitigen Schalters begrenzt, kann das Aufladen des Ansteuerkondensators verhindern und die Leistungssteuerung über die Ausschaltdauer auf besonders effiziente und einfache Weise ermöglicht werden.

Ein kontrollierter Ladestrom für den Ansteuerkondensator kann in besonders wirkungsvoller Weise durch eine Ladestromsteuerschaltung erreicht werden, die zwischen dem Eingangsanschluss des Schaltnetzteils und dem Steueranschluss des primärseitigen Schalters angeordnet ist.

Eine Schwingungsunterdrückungsschaltung kann gemäß einer vorteilhaften Weiterbildung der vorliegenden Erfindung vorgesehen werden, um unerwünschte Schwingungen im Ansteuerkreis des primärseitigen Schalters zu unterdrücken und dadurch die Regelgenauigkeit zu erhöhen.

Eine Phasenschieberschaltung kann zum phasenverschobenen Abschalten des primärseitigen Schalter vorgesehen sein, um den Abschaltvorgang des primärseitigen Schalters zu beschleunigen und dadurch den Wirkungsgrad des gesamten Schaltnetzteils zu erhöhen.

Gemäß einer weiteren Ausführungsform ist die Zeitsteuerungseinheit so ausgebildet, dass während einer Einschaltzeit des primärseitigen Schalters ein Regelsignal deaktivierbar ist. Dadurch können in sehr effizienter Weise variable Pausen und konstante Pulse beim Freischwinger erreicht werden.

Gemäß einer vorteilhaften Ausführungsform weist das erfindungsgemäße Schaltnetzteil zwei primärseitige Hilfswicklungen auf, mit deren Hilfe ebenfalls die Abschaltdauer des primärseitigen Schalters gesteuert werden kann. Damit können geringe Schaltfrequenzen bei geringer Last sowie eine sinkende Verlustleistung im Leerlauf erreicht werden.
Die Sekundärspannung kann relativ genau an den primären Hilfswicklungen bestimmt werden.

Verbindet man eine der Hilfswicklungen über eine Diode und einen Transistor mit dem primärseitigen Schalter, so kann an der Anode der Diode ein Strom eingespeist werden, mit dem die Einschaltzeit des Transistors verlängert wird, ohne die Abschaltschwelle zu beeinflussen. Während der Einschaltzeit des primärseitigen Schalters wird an der Anode der Diode eine negative Spannung erzeugt. Alternativ kann auch die Serienschaltung aus zwei Dioden oder aus zwei Widerständen verwendet werden. Zur Spitzenstrombegrenzung für die Diode kann ein zusätzlicher Widerstand vorgesehen werden.

Verbindet man die eine der Hilfswicklungen über eine zweite Diode so mit einem Kondensator, dass dieser auf die zu regelnde Spannung auf der Sekundärseite aufladbar ist und dass in Abhängigkeit von der an dem Kondensator anliegenden Spannung ein Strom durch die Diode, einen Widerstand, eine dritte Diode und die Basis-Emitter-Strecke des Transistors fließt, der mittels der Einschaltdauer des Transistors das Einschalten des primärseitigen Schalters verzögert, kann eine spannungsgeregelte Einstellung der Ausschaltdauer des primärseitigen Schalters erfolgen. RC-Glieder, die mit einem Steueranschluss des primärseitigen Schalters und mit der ersten Hilfswicklung verbunden sind, können in der Ansteuerschaltung ein relativ niederohmiges Umschalten bei relativ geringem Haltestrom ermöglichen. Durch die Kombination eines relativ großen Kondensators mit einem großen Widerstandswert kann außerdem der primärseitige Schalter verzögert eingeschaltet werden, da die Energie in dem Kondensator nur langsam abgebaut wird. Dies ermöglicht eine kontinuierliche Anpassung an die Last.

Eine Verbesserung des Regelverhaltens bei sehr geringer Last ist mit Hilfe einer Überspannungsschutzschaltung möglich. Durch diese Schaltung werden bei steigender Ausgangsspannung die Ansteuerkondensatoren schneller entladen und langsamer geladen. Dadurch sind sehr lange Pausenzeiten möglich, die automatisch bei steigender Ausgangsspannung verlängert werden. Diese Schaltung wirkt als Überspannungsschutz und verhindert bei einem einfachen Fehler ein gefährliches Ansteigen der Ausgangsspannung.

Gemäß einer vorteilhaften Ausführungsform weist die Ladestromsteuerschaltung eine erste Zener-Diode auf, die so über einen Widerstand mit der Basis eines Ansteuertransistors verbunden ist, dass die Einschaltdauer des Ansteuertransistors das Einschalten des primärseitigen Schalters verzögert. Damit kann eine Funktionsweise erreicht werden, die im wesentlichen der oben beschriebenen entspricht, wobei jedoch die Regelung des Ladestroms für den Ansteuerkondensator vereinfacht realisiert werden kann. Ein wesentlicher Vorteil ist ein reduzierter Bauteilebedarf.

Weiterhin kann die Abschaltung des Hauptschalters durch eine Zener-Diode, welche die Spannung an der Reihenschaltung der Basis-Emitter-Strecke des Hauptschalters mit einem Widerstand begrenzt, erfolgen. Bei Erreichen der Z-Spannung kann der Stromfluss durch den primärseitigen Schalter nicht weiter ansteigen. Dadurch sinkt die Spannung an dem Transformator und die Mitkopplung bewirkt ein schnelles Abschalten.

Die Temperaturabhängigkeit des Ausgangsstromes kann mit Hilfe einer Temperaturkompensationsschaltung auf einfache Weise verringert werden.

Gemäß einer vorteilhaften Weiterbildung der vorliegenden Erfindung kann die Spannungsregelung mittels eines Optokopplers und einer sekundärseitigen Regelschaltung ausgeführt werden. Dabei wird der Optokoppler so angesteuert, dass er bei Unterschreitung der Regelspannung leitend ist. Dadurch läuft das Schaltnetzteil mit maximaler Frequenz, wobei die Frequenz durch einen zum Optokoppler in Reihe geschalteten Widerstand begrenzt wird. Bei Erreichen der Regelspannung wird der Optokoppler soweit gesperrt, dass die Schaltfrequenz auf die Frequenz absinkt, die erforderlich ist, um die Regelspannung am Ausgang aufrecht zu erhalten. Ist der Optokoppler vollständig gesperrt, geht die Schaltfrequenz auf die Minimalfrequenz zurück, bei der nur eine sehr geringe Leistung übertragen wird. In diesem Zustand ist die aufgenommene Leistung der Schaltung sehr gering und es ist somit möglich, trotz der sehr geringen Leerlaufeingangsleistung auch im Leerlauf den Spannungsripple relativ klein zu halten.

Eine Strombegrenzung kann dabei auf der Sekundärseite realisiert werden und den selben Optokoppler nutzen. Alternativ kann die Strombegrenzung auch auf der Primärseite realisiert werden. Dabei wird zur Ansteuerung des primärseitigen Schalters (über den Optokoppler und Vorwiderstand) eine Spannung aus einer Hilfswicklung benutzt, die proportional zur Ausgangsspannung ist. Dadurch sinkt bei fallender Ausgangsspannung der Ladestrom des Ansteuerkondensators und die Frequenz sinkt. Es wird eine geringere Leistung übertragen und der Ausgangsstrom bleibt z. B. nahezu konstant. Durch verschiedene Dimensionierungen sind unterschiedliche Ausgangskennlinien möglich. Allen gemeinsam ist, dass der Kurzschlussstrom sehr gering ist, da im Kurzschluss der Optokoppler gesperrt ist. Neben geringen Kosten und einer exakten Ausgangsspannungsregelung bietet diese Ausführungsform also auch den Vorteil einer geringen Leerlaufeingangsleistung und eines Kurzschlussschutzes.

Anhand der in den beiliegenden Zeichnungen dargestellten Ausgestaltungen wird die Erfindung im folgenden näher erläutert. Ähnliche oder korrespondierende Einzelheiten sind in den Figuren mit denselben Bezugszeichen versehen. Es zeigen:
- **Figur 1**: ein Blockschaltbild eines primär gesteuerten Schaltnetzteils;
- **Figur 2**: einen Stromlaufplan eines weiteren primär gesteuerten Schaltnetzteils;
- **Figur 3**: einen Stromlaufplan eines weiteren Schaltnetzteils;
- **Figur 4**: einen Stromlaufplan eines weiteren Schaltnetzteils;
- **Figur 5**: einen Stromlaufplan eines weiteren Schaltnetzteils;
- **Figur 6**: einen Stromlaufplan eines Schaltnetzteils gemäß der vorliegenden Erfindung.

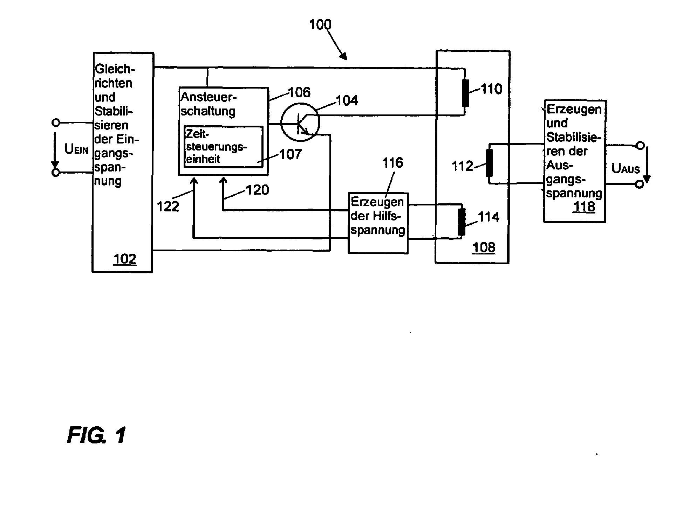

Figur 1 zeigt schematisch ein Blockschaltbild eines Schaltnetzteils.

Das Schaltnetzteil 100 wird am Eingang mit der Wechselspannung U_{EIN}, die beispielsweise Netzspannung sein kann, beaufschlagt. In Europa variiert die Netzspannung zwischen 180 V bis 264 V Wechselspannung, in Amerika zwischen 90 V und 130 V Wechselspannung. In dem Block 102 wird die Eingangsspannung gleichgerichtet und stabilisiert. Außerdem wird sichergestellt, dass Störsignale, die in dem Schaltnetzteil erzeugt werden, nicht ins Wechselspannungsnetz gelangen. Die primärseitige Wicklung 110 des isolierenden Transformators 108 und der primärseitige Schalter 104, der hier ein Transistor ist, bilden einen Serienkreis, der mit der gleichgerichteten Eingangsspannung verbunden ist. Der primärseitige Schalter 104 unterbricht den Strom, der durch die primärseitige Wicklung 110 fließt, entsprechend den Steuersignalen der Ansteuerschaltung 106. Die von der Ansteuerschaltung an den Steuereingang des primärseitigen Schalters 104 gelieferten Schaltpulse werden von dem Block 116, in welchem die Regelgröße mit Hilfe einer Hilfswicklung 114 des Transformators 108 erzeugt wird, gesteuert. Dabei bezeichnen die beiden Signalpfade 120 und 122 zwei wesentliche Funktionen des Blocks 116: Zum einen "pumpt" das Signal 120 die Ansteuerschaltung 106, um die freie Schwingung aufrecht zu erhalten. Zum anderen steuert der Signalpfad 122 die Ansteuerschaltung 106 derart, dass Änderungen in dem Schaltzyklus die elektrische Leistung, die an den Transformator 108 geliefert wird, in gewünschter Weise beeinflussen.

Erfindungsgemäß beinhaltet die Ansteuerschaltung 106 hierfür eine Zeitsteuerungseinheit 107, die gewährleistet, dass die Pausenzeiten (oder auch Ausschaltzeiten), in denen der primärseitige Schalter 104 geöffnet ist, in ihrer Länge an die benötigte Leistung angepasst sind. Die Energie, die während jeder Anschaltphase des primärseitigen Schalters in den Transformator geliefert wird, bleibt jeweils gleich.

Die sekundärseitige Wicklung 112 des Transformators 108 ist, wie aus Figur 1 ersichtlich, mit einem Block 118 verbunden, der die sekundärseitige Spannung U_{AUS} erzeugt und gegebenenfalls stabilisiert.

Im folgenden soll die Funktionsweise des in Figur 1 schematisch gezeigten galvanisch isolierten Schaltnetzteils genauer erläutert werden.

Die Ansteuerschaltung 106 steuert den primärseitigen Schalter 104 so an, dass er im Wechsel in den leitenden und nicht leitenden Zustand gebracht wird. Aufgrund der durch den Block 102 gelieferten Spannung fließt immer dann ein Strom in die primärseitige Wicklung 110, wenn der primärseitige Schalter 104 im leitenden Zustand ist. Eine Änderung des Stromes speichert Energie in das Magnetfeld des Transformators 108. Wenn der primärseitige Schalter 104 sperrt, entlädt sich die in dem Magnetfeld gespeicherte Energie hauptsächlich durch die sekundärseitige Wicklung 112 und in dem Block 118, der die Sekundärspannung erzeugt und stabilisiert. Ein kleiner Teil der Energie wird auch durch die Hilfswicklung 114 in den Block 116 entladen. Dieser erzeugt als Regelgröße eine Hilfsspannung. Die Energie entlädt sich periodisch, aber durch Gleichrichten und Filtern kann als Hilfsspannung eine im wesentlichen gleichgerichtete Spannung erzeugt werden. Da die magnetische Kopplung zwischen den verschiedenen Wicklungen des Transformators 108 konstant ist und nicht von den Werten des Stroms oder der Spannung abhängt, ist der Wert der Hilfsspannung proportional zum Wert der sekundären Spannung und damit zum Wert der Ausgangsspannung.

Mit Hilfe der Zeitsteuerungseinheit 107 kann die Abschaltdauer des primärseitigen Schalters 104 so eingestellt werden, dass die in den Transformator eingespeiste Energie von der Ausgangsspannung abhängt. Es wird also die übertragene Leistung so eingestellt, dass sich eine nahezu lastunabhängige Ausgangsspannung U_{AUS} ergibt. Die Erfassung der Ausgangsspannung auf der Primärseite wird dadurch erleichtert, dass die übertragene Energie bei jedem Puls gleich ist, so dass sich immer eine relativ lange Zeit ergibt, während der in der Hilfswicklung 114 Strom fließt.

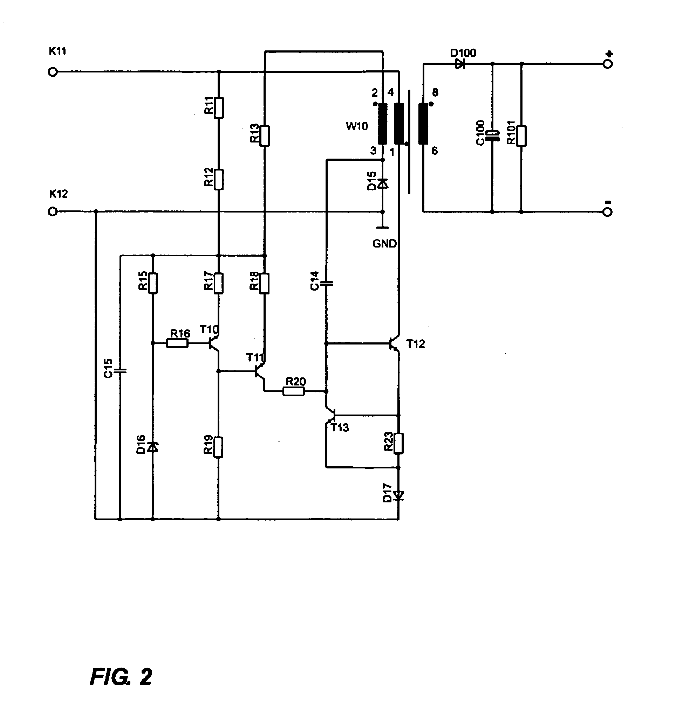

Ein Schaltbild einer möglichen Realisierungsform eines Schaltnetzteils ist in Figur 2 gezeigt. Wesentlich an dieser Schaltung ist, dass die Abschaltdauer des primärseitigen Schalters, hier des Transistors T12, über die entsprechende Ansteuerung des Transistors T11 verlängerbar ist.

Nach dem Anlegen der Eingangsspannung U_{EIN} an die Klemmen K11 und K12 wird über die Widerstände R11 und R12 der Kondensator C15 aufgeladen. Bei ausreichender Spannung fließt ein Strom durch den Widerstand R18, die Basis-Kollektor-Strecke des Transistors T11, den Widerstand R20, die Basis-Emitter-Strecker des Transistors T12, den Widerstand R23 sowie die Diode D17. Dadurch wird der primärseitige Schalter T12 aufgesteuert, es fließt ein Strom durch die primäre Hauptwicklung des Transformators W10 (Anschluss 4/ Anschluss 1). An der Hilfswicklung des Transformators (Anschluss 3 / Anschluss 2) wird eine Spannung induziert, die über den Kondensator C15, den Widerstand R23 und die Kapazität C14 eine Mitkopplung bewirkt und den Einschaltvorgang des primärseitigen Schalter T12 beschleunigt.

Nun steigt der Strom, der durch die primärseitige Hauptwicklung, den primärseitigen Schalter T12, den Widerstand R23 und die Diode D17 fließt, an. Dadurch steigt auch die Spannung, die am Widerstand R23 abfällt, und damit auch die Basis-Emitter-Spannung des Transistors T13. Wenn die Basis-Emitter-Spannung des Transistors T13 die Schwellenspannung überschreitet, wird die Kollektor-Emitter-Strecke von T13 leitend und in der Folge wird der Transistor T12 abgeschaltet. Dadurch wird der Stromfluss in der primärseitigen Wicklung des Transformators unterbrochen und aufgrund der Selbstinduktion kehren sich die Spannungen an den Wicklungen des Transformators um. Sowohl in der sekundärseitigen Wicklung wie auch in der Hilfswicklung fließt ein induzierter Strom.

Der Strom in der sekundärseitigen Wicklung lädt den Kondensator C100 und erzeugt so eine Spannung, die am Ausgang genutzt werden kann. Der Strom in der Hilfswicklung lädt über die Diode D15 und den Widerstand R13 den Kondensator C15 auf eine Spannung, die der Spannung am Kondensator C100, umgerechnet über das Windungszahlverhältnis der Hilfswicklung zur Sekundärwicklung, entspricht. Das heißt, an dem Kondensator C15 entsteht ein Abbild der an dem Kondensator C100 abfallenden Ausgangsspannung. Der Strom in der Hilfswicklung bewirkt außerdem über den Kondensator C14 eine Beschleunigung des Abschaltens des Transistors T12.

Wenn die Spannung, die an dem Kondensator C15 abfällt, kleiner ist als die Summe der Schwellenspannungen der Diode D16 und des Transistors T10, ist der Transistor T10 gesperrt, und der Transistor T11 ist leitend, so dass der Kondensator C14 über die Reihenschaltung des Widerstands R18, des Transistors T12 und des Widerstands R20 schnell geladen wird. Somit wird der primärseitige Schalter T12 nach einer kurzen Pause wieder eingeschaltet und ein neuer Zyklus beginnt.

Überschreitet die Spannung an C15 die Summe der Schwellenspannungen der Diode D16 und des Transistors T10, wird der Transistor T10 leitend und verringert so den Basisstrom des Transistors T11, so dass dieser den Ladestrom des Kondensators C14 begrenzt und damit die Abschaltdauer des primärseitigen Schalters T12 verlängert.

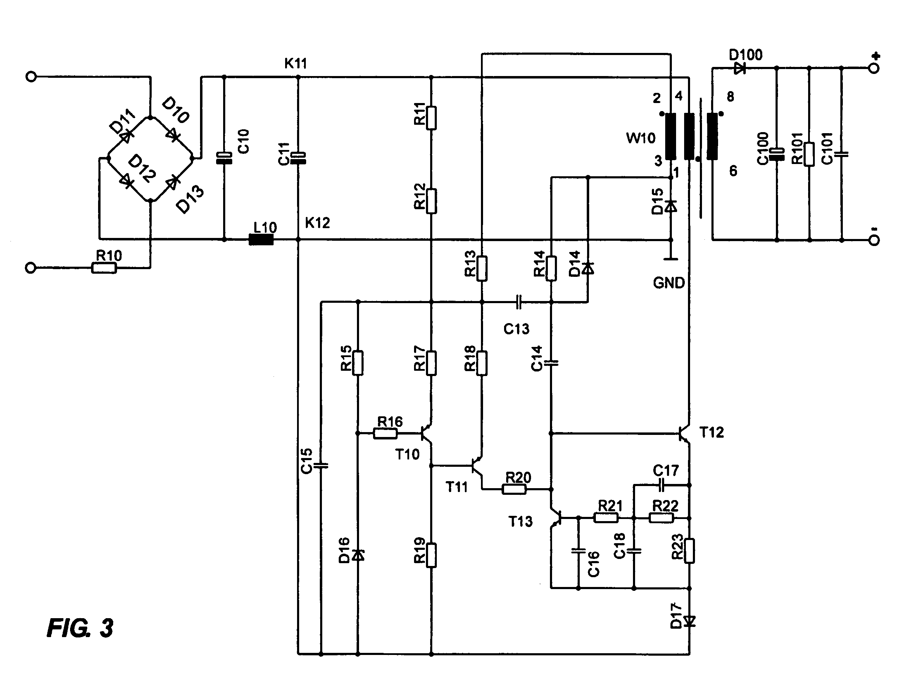

Mit der gezeigten Schaltung kann daher auf besonders einfache Weise durch Einstellen der Abschaltdauer die übertragene Leistung unabhängig von der angeschlossenen Last an die Ausgangsspannung angepasst werden. Die Erfassung der Ausgangsspannung wird, wie bereits erwähnt, dadurch erleichtert, dass die übertragene Energie bei jedem Puls gleich ist, so dass sich immer eine relativ lange Zeit ergibt, während der in der Sekundärwicklung Strom fließt. Kurze Spannungsspitzen, die durch Streuinduktivitäten entstehen, können mit entsprechen dimensionierten RC-Gliedern R13, C13, R14, D14, wie dies in Figur 3 dargestellt ist, herausgefiltert werden. Dadurch stellt die Bildspannung an den Kondensator C15 ein sehr genaues Abbild der Spannung, die an dem Kondensator C100 abfällt, dar.

Eine Begrenzung des Ausgangsstroms ergibt sich durch die mit Hilfe der Widerstände R18 und R20 einstellbare Maximalfrequenz. Diese legt den Maximalleistungspunkt fest. Bei Überschreitung des Maximalleistungspunktes sinkt die Ausgangsspannung und somit auch die Spannung, die an dem Kondensator C15 abfällt. Dadurch sinkt auch der Strom durch die Widerstände R18 und R20, und infolgedessen sinken die Frequenz und die übertragene Leistung. Durch Veränderung des Verhältnisses der Widerstandswerte R18 zu R20 kann die Abhängigkeit des Ausgangsstroms von der Ausgangsspannung eingestellt werden, so dass unterschiedliche Kennlinien möglich sind.

Die in Figur 2 gezeigte Anordnung weist jedoch noch eine Abhängigkeit des Ausgangsstroms von der Eingangsspannung auf, da die Verzögerungszeiten an dem primärseitigen Schalter T12 einen eingangsspannungsabhängigen maximalen Primärstrom verursachen.

Dem kann entgegengewirkt werden, indem, wie aus Figur 3, in der eine zweite Ausführungsform des erfindungsgemäßen Schaltnetzteils gezeigt ist, ersichtlich, eine Kapazität C17 mit dem Emitter des primärseitigen Schalters verbunden wird. In diesem Fall kann die Kapazität C18 durch einen Widerstand ersetzt werden. Im übrigen sind in der Figur 3 Bauelemente mit denselben Bezeichnungen wie in Figur 2 mit den gleichen Bezugszeichen versehen.

Wenn bei abgeschaltetem primärseitigem Schalter T12 der Sekundärstrom auf 0 abgesunken ist, liegt an der sekundärseitigen Wicklung eine Spannung in Höhe der Ausgangsspannung U_{AUS} zuzüglich der Flussspannung der Diode D100 an. Mit dieser Spannung sind die parasitären Kapazitäten geladen. Diese Kapazitäten bilden mit dem Transformator W10 einen Schwingkreis, und die Schwingung, die durch die in den parasitären Kapazitäten gespeicherte Energie verursacht wird, bewirkt unter Umständen ein vorzeitiges Wiedereinschalten des Transistors T12. Dies wiederum führt zu einer kurzzeitigen Regelabweichung und somit zu einer erhöhten Welligkeit der Ausgangsspannung U_{AUS}. Um dies zu verhindern, wird die Spannung der Hilfswicklung gemäß der in Figur 3 gezeigten erweiterten Ausführungsform über ein aus der Kapazität C13, den Widerstand R14, der Diode D14 und dem Widerstand R 13 gebildeten Filter an den Kondensator C14 geführt.

In der Figur 3 ist außerdem ein durch den Kondensator C16, den Widerstand R21, den Widerstand R22 und den Kondensator C18 gebildetes Verzögerungsglied vorgesehen, welches das Ansteigen der Basis-Emitter-Spannung an dem Transistor T13 aufgrund des Spannungsanstiegs über den Widerstand R23 verzögert. Dieses Verzögerungsglied ist für die Funktion der Schaltung nicht unbedingt erforderlich, erhöht aber den Wirkungsgrad, da aufgrund der Phasenverschiebung der Abschaltvorgang des Transistors T12 beschleunigt wird.

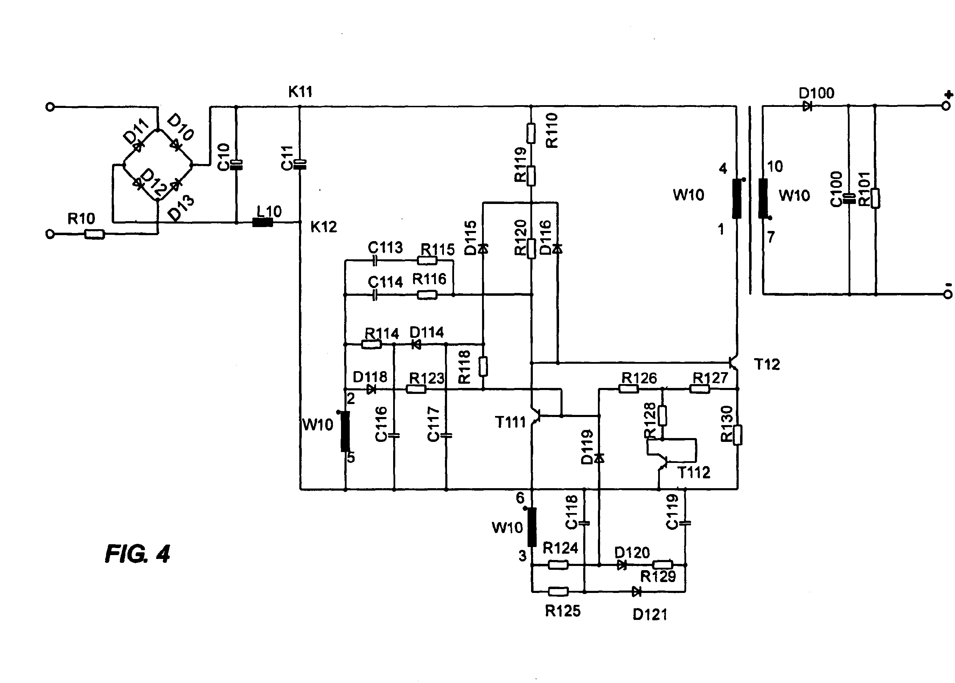

Bei einem Schaltnetzteil, das in Form eines Stromlaufplanes in Figur 4 dargestellt ist, kann eine zweite Hilfswicklung zur Leistungsregelung vorgesehen sein.

Das in Figur 4 gezeigte Schaltnetzteil mit galvanischer Trennung zwischen Primär- und Sekundärteil stellt ebenfalls einen freischwingenden Sperrwandler dar. Mit der zusätzlichen primärseitigen Hilfswicklung W10 3-6 wird über den Widerstand R124 während der Einschaltzeit des primärseitigen Schalters T12 an der Anode der Diode D119 eine negative Spannung erzeugt. (Anstelle des Widerstands R124 könnte auch eine Diode verwendet werden.) Dadurch kann an der Anode der Diode D119 ein Strom eingespeist werden, mit dem die Einschaltzeit des Transistors T111 verlängert wird, ohne die Abschaltschwelle zu beeinflussen.

Somit ist ein Steuerung der Abschaltdauer des Transistors T12 möglich. Dies führt zu einer geringen Schaltfrequenz bei geringer Last, und die Verlustleistung im Leerlauf und bei geringer Last sinkt. Die Sekundärspannung kann relativ genau mit Hilfe der primären Hilfswicklungen bestimmt werden.

Mit Hilfe der Diode D120, des Widerstands R129, der Kapazität C119 und der Diode D121 ist nun eine einfache Spannungsbegrenzung möglich. Das RC-Glied R125, C118 filtert dabei die induzierten Spannungsspitzen der Streuinduktivität heraus und verbessert somit das Regelverhalten. Der Widerstand R125 dient einer Spitzenstrombegrenzung zum Schutz der Diode D121.

Die Parallelschaltung der RC-Glieder C113, R115 und C114, R116 bewirkt ein niederohmiges Umschalten des Transistors T111 bei relativ geringem Haltestrom. Darüber hinaus kann durch die Kombination einer relativ großen Kapazität C114 mit einem großen Widerstandswert R116 der Transistor T12 verzögert eingeschaltet werden, da die Energie in den Kondensator 114 nur langsam abgebaut wird. Somit kann eine kontinuierliche Anpassung der Pausendauer an die Last erfolgen.

Eine Verbesserung des Regelverhaltens bei sehr geringer Last kann in der gezeigten Ausführungsform mit Hilfe der Diode D114 der Kapazität C117, der Diode 115 und des Widerstands R120 bzw. der Diode D116 erfolgen. Durch diese Schaltung werden bei steigender Ausgangsspannung die Kondensatoren C113 und C114 schneller entladen und langsamer aufgeladen. Dadurch sind sehr lange Pausenzeiten möglich, die automatisch bei steigender Ausgangsspannung verlängert werden. Diese Schaltung wirkt außerdem als Überspannungsschutz und verhindert bei einem einfachen Fehler ein gefährliches Ansteigen der Ausgangsspannung U_{AUS}.

Mit Hilfe des RC-Gliedes R114, C116 können die induzierten Spannungsspitzen der Streuinduktivität herausgefiltert werden, wodurch das Regelverhalten weiter verbessert werden kann.

Zur Verringerung der Abhängigkeit des Ausgangsstroms von der Ausgangsspannung kann die Einschaltschwelle des Transistors T111 über den Widerstand R118 angepasst werden.

Weiterhin kann mit Hilfe des Widerstands R123 und der Diode D118 die Einschaltschwelle des Transistors T111 zur Verringerung der Abhängigkeit des Ausgangsstroms von der Eingangsspannung angepasst werden.

Schließlich ist in der in Figur 4 gezeigten Anordnung zur Verringerung der Temperaturabhängigkeit des Ausgangsstroms eine Temperaturkompensationsschaltung vorgesehen, die den Transistor T112, den Widerstand R128 und den Widerstand R127 umfasst.

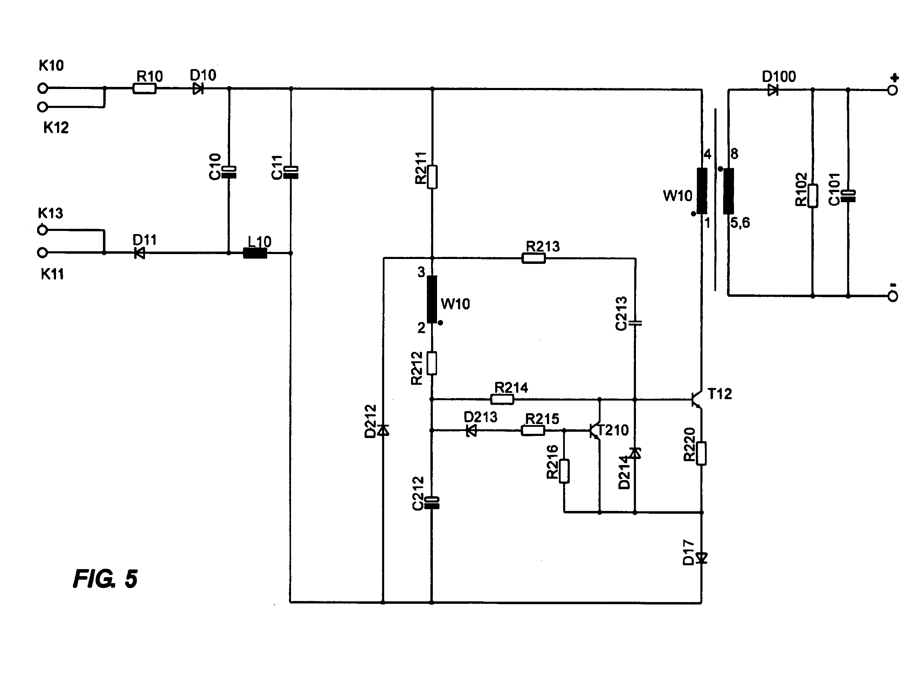

Eine weitere Ausführungsform des erfindungsgemäßen Schaltnetzteils soll im folgenden mit Bezug auf Figur 5 erläutert werden. Dabei ist die Funktionsweise der gezeigten Schaltung dieselbe wie die der Schaltungen aus den Figuren 2 und 3 mit dem Unterschied, dass die Schaltung gemäß Figur 5 mit wesentlich weniger Bauelementen auskommt, weil die Regelung des Ladestroms für den Ansteuerkondensator C213 einfacher realisiert ist. Die Abschaltung des primärseitigen Schalters T12 erfolgt durch eine Zener-Diode D214, welche die Spannung an der Reihenschaltung der Basis-Emitter-Strecke des primärseitigen Schalters T12 und des Widerstands R220 begrenzt. Bei Erreichen der Z-Spannung kann der Stromfluss durch den Transistor T210 nicht weiter ansteigen, dadurch sinkt die Spannung an dem Transformator und die Mitkopplung bewirkt ein schnelles Abschalten des primärseitigen Schalters T12.

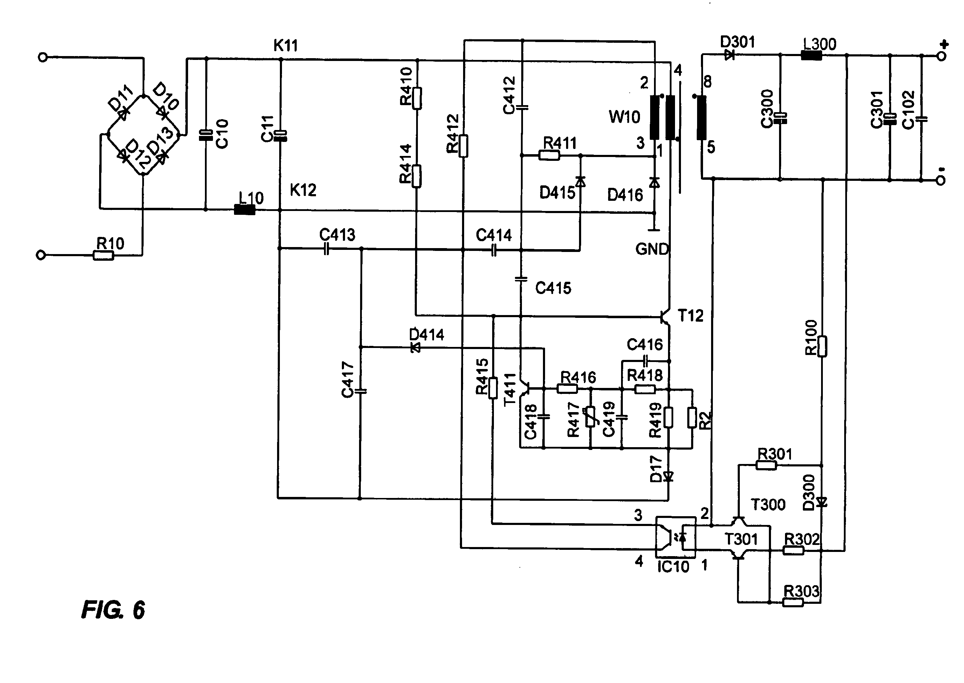

Mit Bezug aus Figur 6 soll nunmehr eine Ausführungsform des erfindungsgemäßen Schaltnetzteils beschrieben werden, bei der ein zusätzlicher Optokoppler zur Rückkopplung der Ausgangsspannung an die Primärseite eingesetzt wird. Es sind verschiedene Schaltungen für Schaltnetzteile mit geringer Leerlaufeingangsleistungen bekannt, die bei Unterschreitung einer festgelegten Ausgangsleistung den Primärteil des Netzteils mittels eines Optokopplers ausschalten und dadurch eine sehr geringe Eingangsleistung ermöglichen. Nachteil dieses bekannten Prinzips ist jedoch, dass im Leerlauf die Ausgangsspannung eine sehr große Ripplespannung aufweist.

Bei einem Schaltnetzteil, wie in Figur 6 gezeigt, kann die Spannungsregelung mittels des Optokopplers IC10 und einer sekundärseitigen Regelschaltung ausgeführt werden. Dabei wird der Optokoppler IC10 so angesteuert, dass er bei Unterschreitung der Regelspannung leitend ist. Dadurch arbeitet das Schaltnetzteil unterhalb der Regelspannung mit maximaler Frequenz, wobei die Frequenz durch einen zum Optokoppler IC10 in Reihe geschalteten Widerstand R415 begrenzt wird. Bei Erreichen der Regelspannung wird der Optokoppler IC10 soweit gesperrt, dass die Schaltfrequenz auf die Frequenz absinkt, die erforderlich ist, um die Regelspannung am Ausgang aufrecht zu erhalten. Ist der Optokoppler IC10 vollständig gesperrt, geht die Schaltfrequenz auf die Minimalfrequenz zurück, bei der nur eine sehr geringe Leistung übertragen wird. In diesem Zustand ist die aufgenommene Leistung der Schaltung sehr gering. Somit ist es möglich, trotz der sehr geringen Leerlaufeingangsleistung auch im Leerlauf den Spannungsripple relativ klein zu halten.

Eine Strombegrenzung kann dabei auf der Sekundärseite realisiert werden und denselben Optokoppler IC10 nutzen.

Alternativ kann die Strombegrenzung auch auf der Primärseite realisiert werden. Dabei wird zur Ansteuerung des primärseitigen Schalters T12 über den Optokoppler IC10 und den Vorwiderstand R415 eine Spannung aus der Hilfswicklung W10 2-3 benutzt, die proportional zur Ausgangsspannung ist. Dadurch sinkt bei fallender Ausgangsspannung der Ladestrom des Kondensators C414 und die Frequenz sinkt. Es wird eine geringere Leistung übertragen und der Ausgangsstrom bleibt nahezu konstant. Durch verschiedene Dimensionierungen sind unterschiedliche Ausgangskennlinien möglich. Allen gemeinsam ist, dass der Kurzschlussstrom sehr gering ist, da im Kurzschluss der Optokoppler gesperrt ist.

Im Unterschied zu bekannten Verfahren, bei denen Optokoppler eingesetzt werden, wird hier die Minimalfrequenz und damit die Minimalleistung bei gesperrtem Optokoppler, die Maximalfrequenz bei leitendem Optokoppler erreicht. Die Stromregelung erfolgt durch Steuerung der Schaltfrequenz in Abhängigkeit von der durch eine Hilfswicklung übertragenen Ausgangsspannung.

## Patentansprüche

1. Schaltnetzteil mit einer Primärseite und einer Sekundärseite und mit
einem Transformator (108; W10) mit einer primärseitigen Wicklung (110), einer sekundärseitigen Wicklung (112) und mindestens einer Hilfswicklung (114), wobei die primärseitige Wicklung (110) und die Hilfswicklung (114) mit der Primärseite verbunden sind und die sekundärseitige Wicklung (112) mit der Sekundärseite verbunden ist,
einem primärseitigen Schalter (104;T12), der mit der primärseitigen Wicklung (110) verbunden ist, um einen Stromfluss durch die primärseitige Wicklung (110) zu unterbrechen,
einer frei schwingenden Ansteuerschaltung (106) zum Erzeugen vom Schaltpulsen, die den primärseitigen Schalter (104;T12) ansteuern,
einer Schaltung (116) zum Erzeugen einer Bildspannung zwischen den Anschlüssen der Hilfswicklung (114), um eine Bildspannung zu erzeugen, die auf der Primärseite eine zu regelnde Spannung auf der Sekundärseite abbildet,
einen Optokoppler (IC10) zum Rückkoppeln einer sekundärseitigen Spannung in den Primärkreis,
wobei das Schaltnetzteil weiterhin eine Zeitsteuerungseinheit (107) aufweist, die so mit dem primärseitigen Schalter (104; T12) gekoppelt ist, dass die Dauer einer Ausschaltzeit des primärseitigen Schalters (104; T12) innerhalb eines Schaltzyklus einstellbar ist,
**dadurch gekennzeichnet, dass** die Zeitsteuerungseinheit (107) eine Diode (D17) aufweist, die so zwischen dem primärseitigen Schalter (T12) und einem Eingangsanschluss (K12) des Schaltnetzteils angeordnet ist, dass der Ladestrom eines Ansteuerkondensators (C14; C213), über den die Ausschaltzeit des primärseitigen Schalters (T12) einstellbar ist, während der Ausschaltzeit des primärseitigen Schalters begrenzbar ist.

2. Schaltnetzteil nach Anspruch 1, **dadurch gekennzeichnet, dass** das Schaltnetzteil zwei primärseitige Hilfswicklungen (W10 3-6, W10 2-5) umfasst.

3. Schaltnetzteil nach einem der Ansprüche 1 bis 2, **dadurch gekennzeichnet, dass** der Ladestrom des Ansteuerkondensators (C14) durch eine Ladestromsteuerschaltung (R15, D16, R17, T10, R19, T11, R18, R20, R16), die zwischen dem Eingangsanschluss (K12) des Schaltnetzteils und einem Steueranschluss des primärseitigen Schalters (T12) angeordnet ist, steuerbar ist.

4. Schaltnetzteil nach Anspruch 3, **dadurch gekennzeichnet, dass** die Ladestromsteuerschaltung zwei Verstärker (T10, T11) aufweist, die miteinander in Serie geschaltet sind.

5. Schaltnetzteil nach einem der Ansprüche 1 bis 4, **dadurch gekennzeichnet, dass** eine Schwingungsunterdrückungsschaltung (C13, R14, D14, R13) so mit der Hilfswicklung verschaltet ist, dass unerwünschte Schwingungen im Ansteuerkreis des primärseitigen Schalters unterdrückt werden.

6. Schaltnetzteil nach einem der Ansprüche 1 bis 5, **dadurch gekennzeichnet, dass** eine Phasenschieberschaltung (T13, C16, R21, C18, R22) zum phasenverschobenen Abschalten des primärseitigen Schalters vorgesehen ist.

7. Schaltnetzteil nach einem der Ansprüche 1 bis 6, **dadurch gekennzeichnet, dass** die Zeitsteuerungseinheit so ausgebildet ist, dass während einer Einschaltzeit des primärseitigen Schalters (T12) ein Regelsignal deaktivierbar ist.

8. Schaltnetzteil nach einem der Ansprüche 1 bis 7, soweit abhängig von Anspruch 2, **dadurch gekennzeichnet, dass** eine der Hilfswicklungen (W10 3-6) über einen Widerstand (R124), eine Diode (D119) und einen Transistor (T111) mit dem primärseitigen Schalter (T12) verbunden ist.

9. Schaltnetzteil nach Anspruch 8, **dadurch gekennzeichnet, dass** die eine der Hilfswicklungen (W10 3-6) über eine zweite Diode (D121) so mit einem Kondensator (C119) verbunden ist, dass dieser auf die zu regelnde Spannung auf der Sekundärseite aufladbar ist und dass in Abhängigkeit von der an dem Kondensator (C119) anliegenden Spannung ein Strom durch die Diode (D119), einen Widerstand (R129), eine dritte Diode (D120) und die Basis-Emitter-Strecke des Transistors (T111) fließt, der mittels der Einschaltdauer des Transistors (T111) das Einschalten des primärseitigen Schalters (T12) verzögert.

10. Schaltnetzteil nach einem der Ansprüche 1 bis 9, **dadurch gekennzeichnet, dass** die Ansteuerschaltung eine Überspannungsschutzschaltung (D114, C117, D115, R120, D116) aufweist.

11. Schaltnetzteil nach einem der Ansprüche 1 bis 10, **dadurch gekennzeichnet, dass** die Ladestromsteuerschaltung eine erste Zener-Diode (D213) aufweist, die so über einen Widerstand (R215) mit der Basis eines Ansteuertransistors (T210) verbunden ist, dass die Einschaltdauer des Ansteuertransistors (T210) das Einschalten des primärseitigen Schalters (T12) verzögert.

12. Schaltnetzteil nach Anspruch 11, **dadurch gekennzeichnet, dass** die Ladestromsteuerschaltung weiterhin eine zweite Zener-Diode (D214) aufweist, die parallel zu der Serienschaltung der Basis-Emitter-Strecke des primärseitigen Schalters (T12) und eines mit dem Emitter des primärseitigen Schalters (T12) verbundenen Widerstandes (R420) geschaltet ist.

13. Schaltnetzteil nach einem der Ansprüche 1 bis 12, **dadurch gekennzeichnet, dass** es weiterhin eine Temperaturkompensationsschaltung (T111, R126, R127, R128, T112) zur Temperaturkompensation der Schaltschwelle des primärseitigen Schalters (T12) aufweist.

14. Schaltnetzteil nach einem der Ansprüche 1 bis 13, **dadurch gekennzeichnet, dass** der Optokoppler (IC10) so verbunden ist, dass in einem gesperrten Zustand des Optokopplers eine minimale Leistung und in einem leitenden Zustand eine maximale Leistung übertragbar ist.

## Claims

1. Switched-mode power supply with a primary side and a secondary side and with a transformer (108; W10) with a primary-side winding (110), a secondary-side winding (112) and at least one auxiliary winding (114), wherein the primary-side winding (110) and the auxiliary winding (114) are connected to the primary side and the secondary-side winding (112) is connected to the secondary side,
a primary-side switch (104;T12), which is connected to the primary-side winding (110) in order to interrupt a flow of current through the primary-side winding (110),
a freely oscillating control circuit (106) for generating switching pulses which drive the primary-side switch (104;T12),
a circuit (116) for generating an image voltage between the terminals of the auxiliary winding (114), in order to generate an image voltage, which on the primary side replicates a voltage to be controlled on the secondary side,
an opto-coupler for feeding back a secondary-side voltage into the primary circuit,
wherein the switched-mode power supply further comprises a timing unit (107), which is coupled to the primary-side switch (104;T12) such that the duration of a turn-off period of the primary-side switch (104;T12) is variable within a switching cycle,
**characterized in that**
the timing unit (107) comprises a diode (D17), which is arranged between the primary-side switch (T12) and an input terminal (K12) of the switched-mode power supply such that the charging current of a control capacitor (C14; C213) that adjusts the turn-off time of the primary-side switch (T12) can be limited during the turn-off time of the primary-side switch (T12).

2. Switched-mode power supply according to claim 1, **characterized in that** the switch-mode power supply comprises two primary-side auxiliary windings (W10 3-6, W10 2-5).

3. Switched-mode power supply according to claim 1-2, wherein the charging current of the control capacitor (C14) can be controlled by a charge-current control circuit (R15, D16, R17, T10, R19, T11, R18, R20, R16), which is arranged between the input terminal (K12) of the switched-mode power supply and a control terminal of the primary-side switch (T12).

4. Switched-mode power supply according to claim 3, wherein the charge-current control circuit comprises two amplifiers (T10, T11), which are connected in series.

5. Switched-mode power supply according to one of the claims 1 - 4, wherein an oscillation suppression circuit (C13, R14, D14, R13) is connected to the auxiliary winding such that unwanted oscillations in the control circuit of the primary-side switch are suppressed.

6. Switched-mode power supply according to one of the claims 1 - 5, wherein a phase-shift circuit (T13, C16, R21, C18, R22) is provided for the phase-shifted turn-off of the primary-side switch.

7. Switched-mode power supply according to one of the claims 1 - 6, wherein the timing unit is adapted to deactivate a control signal during a turn-on period of the primary-side switch (T12).

8. Switched-mode power supply according to one of the claims 1 - 7 as far as dependent on claim 2, wherein one of the auxiliary windings (W10 3-6) is connected to the primary-side switch via a resistor (R124), a diode (D119) and a transistor (T111).

9. Switched-mode power supply according to claim 8, wherein one of the auxiliary windings (W10 3-6) is connected via a second diode (D121) to a capacitor (C119) such that it can be charged to the voltage to be controlled on the secondary side and that, in dependence of the voltage present at the capacitor (C119), a current flows through the diode (D119), resistor (R129), a third diode (D120) and the base-emitter junction of the transistor (T111), which delays the turn-on of the primary-side switch (T12) due to the turn-on duration of the transistor (T111).

10. Switched-mode power supply according to one of the claims 1 - 9, wherein the control circuit comprises an overvoltage protection circuit (D111, C117, D115, R120, D116).

11. Switched-mode power supply according to one of the claims 1 - 10, wherein the charge-current control circuit further comprises a first Zener diode (D213), which is connected via a resistor (R215) to the base of a control transistor (T21 0) such that the turn-on duration of the control transistor (T211) delays the turn-on of the primary-side switch (T12).

12. Switched-mode power supply according to claim 11, wherein the charge-current control circuit furthermore comprises a second Zener diode (D214), which is connected in parallel to the series circuit of the base-emitter junction of the primary-side switch (T12) and a resistor (R420) connected to the emitter of the primary-side switch (T12).

13. Switched-mode power supply according to one of the claims 1 - 12, further comprising a temperature compensation circuit (T111, R126, R127, R128, T112) for compensating the temperature of the switching threshold of the primary-side switch (T12).

14. Switched-mode power supply according to one of the claims 1 - 13, wherein the optocoupler (IC10) is connected such that with the optocoupler in a blocking state a minimum power can be transferred and in the conducting state a maximum power can be transferred.

## Revendications

1. Bloc d'alimentation à découpage comprenant un côté primaire et un côté secondaire et
un transformateur (108 ; W10), avec un enroulement (110) côté primaire, un enroulement (112) côté secondaire et au moins un enroulement auxiliaire (114), l'enroulement (110) côté primaire et l'enroulement auxiliaire (114) étant reliés au côté primaire et l'enroulement (112) secondaire étant relié au côté secondaire,
un interrupteur (104 ; T12) côté primaire, qui est relié à l'enroulement (110) côté primaire, afin d'interrompre un flux de courant passant par l'enroulement (110) côté primaire,
un circuit d'activation (106) vibrant librement pour générer des impulsions de commutation, qui activent l'interrupteur (104 ; T12) côté primaire,
un circuit (116) pour générer une tension d'image entre les branchements de l'enroulement auxiliaire (114), afin de générer une tension d'image qui reproduit sur le côté primaire une tension à réguler sur le côté secondaire,
un opto-coupleur (IC10) pour la réinjection d'une tension côté secondaire dans le circuit primaire,
le bloc d'alimentation à découpage présentant également une unité de commande de temps (107), qui est couplée à l'interrupteur (104 ; T12) côté primaire de telle sorte que la durée d'un temps de déconnexion de l'interrupteur (104 ; T12) côté primaire peut être réglée dans les limites d'un cycle de commutation,
**caractérisé en ce que** l'unité de commande de temps (107) présente une diode (D17) qui est disposée entre l'interrupteur (T12) côté primaire et un branchement d'entrée (K12) du bloc d'alimentation à découpage de sorte que le courant de charge d'un condensateur d'activation (C14 ; C213), par lequel le temps de déconnexion de l'interrupteur (T12) côté primaire peut être réglé, peut être limité pendant le temps de déconnexion de l'interrupteur côté primaire.

2. Bloc d'alimentation à découpage selon la revendication 1, **caractérisé en ce que** le bloc d'alimentation à découpage comporte deux enroulements auxiliaires (W10 3-6, W10 2-5) côté primaire.

3. Bloc d'alimentation à découpage selon l'une quelconque des revendications 1 à 2, **caractérisé en ce que** le courant de charge du condensateur d'activation (C14) peut être commandé par un circuit de commande de courant de charge (R15, D16, R17, T10, R19, T11, R18, R20, R16), qui est disposé entre le branchement d'entrée (K12) du bloc d'alimentation à découpage et un branchement de commande de l'interrupteur (T12) côté primaire.

4. Bloc d'alimentation à découpage selon la revendication 3, **caractérisé en ce que** le circuit de commande de courant de charge présente deux amplificateurs (T10, T11), qui sont branchés en série l'un avec l'autre.

5. Bloc d'alimentation à découpage selon l'une quelconque des revendications 1 à 4, **caractérisé en ce qu'**un circuit de suppression de vibration (C13, R14, D14, R13) est connecté avec l'enroulement auxiliaire de telle sorte que des vibrations inopportunes sont supprimées dans le circuit d'activation de l'interrupteur côté primaire.

6. Bloc d'alimentation à découpage selon l'une quelconque des revendications 1 à 5, **caractérisé en ce qu'**un circuit déphaseur (T13, C16, R21, C18, R22) est prévu pour la déconnexion déphasée de l'interrupteur côté primaire.

7. Bloc d'alimentation à découpage selon l'une quelconque des revendications 1 à 6, **caractérisé en ce que** l'unité de commande de temps est conçue de telle sorte qu'un signal de réglage peut être désactivé pendant un temps d'enclenchement de l'interrupteur (T12) côté primaire.

8. Bloc d'alimentation à découpage selon l'une quelconque des revendications 1 à 7, si dépendant de la revendication 2, **caractérisé en ce que** l'un des enroulements auxiliaires (W10 3-6) est relié par une résistance (R124), une diode (D119) et un transistor (T111) à l'interrupteur (T12) côté primaire.

9. Bloc d'alimentation à découpage selon la revendication 8, **caractérisé en ce que** l'un des enroulements auxiliaires (W10 3-6) est relié par une seconde diode (D121) à un condensateur (C119), de telle sorte que celui-ci peut être chargé jusqu'à la tension à réguler du côté primaire et que, en fonction de la tension s'appliquant sur le condensateur (C119), un courant circule à travers la diode (D119), une résistance (R129), une troisième diode (D120) et le tronçon émetteur-base du transistor (T111), qui temporise l'enclenchement de l'interrupteur (T12) côté primaire au moyen de la durée d'enclenchement du transistor (T111).

10. Bloc d'alimentation à découpage selon l'une quelconque des revendications 1 à 9, **caractérisé en ce que** le circuit d'activation présente un circuit de protection contre les surtensions (D114, C117, D115, R120, D116).

11. Bloc d'alimentation à découpage selon l'une quelconque des revendications 1 à 10, **caractérisé en ce que** le circuit de commande de courant de charge présente une première diode Zener (D213), qui est reliée par une résistance (R215) à la base d'un transistor d'activation (T210) de telle sorte que la durée d'enclenchement du transistor d'activation (T210) temporise l'enclenchement de l'interrupteur (T12) côté primaire.

12. Bloc d'alimentation à découpage selon la revendication 11, **caractérisé en ce que** le circuit de commande de charge présente également une seconde diode Zener (D214), qui est branchée en parallèle au circuit série du tronçon émetteur-base de l'interrupteur (T12) côté primaire et d'une résistance (R420) reliée à l'émetteur de l'interrupteur (T12) côté primaire.

13. Bloc d'alimentation à découpage selon l'une quelconque des revendications 1 à 12, **caractérisé en ce qu'**il présente également un circuit de compensation de température (T111, R126, R127, R128, T112) pour la compensation thermique du seuil de commutation de l'interrupteur (T12) côté primaire.

14. Bloc d'alimentation à découpage selon l'une quelconque des revendications 1 à 13, **caractérisé en ce que** l'opto-coupleur (IC10) est relié de telle sorte qu'une puissance minimale et une puissance maximale peuvent être transmises lorsque l'opto-coupleur est respectivement dans un état bloqué et dans un état conducteur.
